(19) Europäisches Patentamt
European Patent Office
Office européen des brevets

(11) **EP 3 717 530 B1**

(12) **EUROPÄISCHE PATENTSCHRIFT**

(45) Veröffentlichungstag und Bekanntmachung des Hinweises auf die Patenterteilung:
**01.07.2026  Patentblatt 2026/27**

(51) Internationale Patentklassifikation (IPC):
**C08F 220/18** (2006.01)   **C09J 133/08** (2006.01)
**C09J 7/38** (2018.01)

(21) Anmeldenummer: **18811550.5**

(22) Anmeldetag: **30.11.2018**

(52) Gemeinsame Patentklassifikation (CPC):
(C-Sets verfügbar)
**C09J 133/08; C08F 220/1808; C09J 7/385;**
C09J 2203/326                                    (Forts.)

(86) Internationale Anmeldenummer:
**PCT/EP2018/083239**

(87) Internationale Veröffentlichungsnummer:
**WO 2019/106194 (06.06.2019 Gazette 2019/23)**

(54) **CHEMIKALIENBESTÄNDIGE HAFTKLEBMASSE**

CHEMICAL-RESISTANT ADHESIVE

ADHÉSIF RÉSISTANT AUX PRODUITS CHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2017   DE 102017221702**

(43) Veröffentlichungstag der Anmeldung:
**07.10.2020   Patentblatt 2020/41**

(73) Patentinhaber: **TESA SE**
**22848 Norderstedt (DE)**

(72) Erfinder:
• **PÜTZ, Benjamin**
**22527 Hamburg (DE)**
• **KRETZMER, Ralf**
**22391 Hamburg (DE)**
• **BEFUSS, Julia**
**22457 Hamburg (DE)**

• **KUGLER, Lutz**
**22335 Hamburg (DE)**

(74) Vertreter: **tesa SE**
**Hugo-Kirchberg-Straße 1**
**22848 Norderstedt (DE)**

(56) Entgegenhaltungen:
EP-A1- 3 177 110         EP-A2- 2 295 515
WO-A1-2012/173066        WO-A1-2017/057097
WO-A1-2017/140801        JP-A- 2005 105 228
JP-A- 2009 024 157       US-A1- 2008 033 109
US-A1- 2008 145 572      US-A1- 2017 002 236
US-A1- 2017 022 396

• MIYAMOTO MASAO ET AL: "Dynamic Layer Detection of Rotating Multilayered Optical Memory", JAPANESE JOURNAL OF APPLIED PHYSICS, vol. 47, no. 7, 1 July 2008 (2008-07-01), JP, pages 5944 - 5946, XP055933872, ISSN: 0021-4922, DOI: 10.1143/JJAP.47.5944

(52) Gemeinsame Patentklassifikation (CPC): (Forts.)

C-Sets
C08F 220/1804, C08F 220/1808, C08F 220/14,
C08F 220/06;
C08F 220/1804, C08F 220/301, C08F 220/06;
C08F 220/1804, C08F 220/301, C08F 220/14,
C08F 220/06;

C08F 220/1804, C08F 220/301, C08F 220/281,
C08F 220/06;
C08F 220/1804, C08F 220/301, C08F 222/102,
C08F 220/06;
C08F 220/1808, C08F 220/1811, C08F 220/16;
C08F 220/1808, C08F 220/301, C08F 220/06;
C08F 220/1808, C08F 220/301, C08F 220/14,
C08F 220/06

# EP 3 717 530 B1

**Beschreibung**

Die Erfindung betrifft das technische Gebiet der Polyacrylate, wie sie vielfach als Basiskomponente in Klebmassen, insbesondere in Haftklebmassen verwendet werden. Spezifischer betrifft die Erfindung eine Haftklebmasse, die ein Polyacrylat mit hoher Beständigkeit gegenüber Chemikalien enthält.

Mit zunehmender Verbreitung von elektronischen Geräten weiten sich die Anwendungsgebiete derselben aus. Daraus ergeben sich auch wachsende Anforderungen an die verbauten Komponenten. So wird es - beispielsweise durch die Entwicklung von am Körper getragenen elektronischen Geräten (so genannten Wearables) wie etwa Smart-Watches - immer wichtiger, dass die dort verwendeten Verklebungen eine hohe Resistenz gegenüber verschiedenen Chemikalien aufweisen und auch nach längerer Lagerung in verschiedenen Medien kaum bis gar nicht an Klebkraft verlieren. Ähnliche Anforderungen werden auch vermehrt an andere elektronische Geräte wie Smartphones, Tablets, Notebooks, Kameras, Videokameras, Tastaturen und Touchpads gestellt.

Ein weiterer Bereich, in dem chemikalienbeständige Verklebungen von Bedeutung sind, ist das Anbringen von Etiketten oder Labels in Umgebungen, in denen der Kontakt mit Chemikalien möglich ist, wie zum Beispiel in Motorräumen. Häufig ist auch für manipulationssichere Etiketten eine hohe Beständigkeit gegenüber verschiedenen Chemikalien gefordert. Verschiedentlich ist in diesem Umfeld die Verwendung Polyacrylat-basierter Kleb- und speziell Haftklebmassen beschrieben worden.

So beschreibt WO 2016/089687 A1 einen Haftklebstoff, der sich aus dem Reaktionsprodukt von 20 bis 60 Gew.-% Methylacrylat; 40 bis 80 Gew.-% Ethyl-, Propyl- und/oder Butylacrylat; 0,2 bis 5 Gew.-% eines funktionalisierten Acrylatmonomeren und eines Vernetzers ableitet.

WO 2017/132058 A1 offenbart eine Haftklebmasse, die ein Polymer enthält, welches durch Polymerisation von i) 2-Ethylhexylacrylat, Butylacrylat, Isooctylacrylat, 2-Propylheptylacrylat, n-Octylacrylat, 2-Ethylhexylmethacrylat, Butylmethacrylat, Isooctylmethacrylat, 2-Propylheptylmethacrylat und/oder n-Octylmethacrylat; ii) Acrylnitril und/oder Methacrylnitril; und iii) Acrylsäure und/oder Methacrylsäure gebildet wird.

DE 10 2015 215 247 A1 hat eine Haftklebmasse zum Gegenstand, die als Basispolymer mindestens einen oder mehrere feste Acrylnitril-Butadien-Kautschuke sowie Klebharze enthält, wobei der Anteil der Klebharze bei 30 bis 130 phr und der Acrylnitril-Gehalt in dem oder den festen Acrylnitril-Butadien-Kautschuk(en) zwischen 10 und 30 Gew.-% liegt.

US 5,665,835 beschreibt ein haftklebriges Copolymer mit hohem polaren Anteil, welches durch Copolymerisation von Alkylacrylatmonomeren mit 4 bis 8 C-Atomen in der Alkylgruppe und 15 bis 50 Gew.-% polaren Acrylmonomeren, die mit Carboxy- oder Methoxygruppen funktionalisiert sind, erhalten wird.

US 2003/0032715 A1, US 2008/0033109 A1, US 9,482,896 B2, US 8,372,492 B2 und EP 989 174 A1 beschreiben Polyacrylat-basierte Klebmassen, in deren Polyacrylaten aromatische Monomere einpolymerisiert sind. Überwiegend steht dabei allerdings die Modifikation optischer Eigenschaften im Vordergrund.

US 2008/145572 A1 beschreibt eine haftklebrige optische Folie umfassend: eine optische Folie umfassend eine transparente Basisfolie und eine diskotische Flüssigkristallschicht auf einer Seite der Basisfolie; und eine Haftklebmasseschicht auf der diskotischen Flüssigkristallschicht, wobei die Haftklebmasseschicht aus einer Haftklebmasse hergestellt ist, die ein Acrylatpolymer mit einem gewichtsmittleren Molekulargewicht von 1.000.000 bis 3.000.000 umfassend ein Alkyl(meth)acrylat und ein eine Ringstruktur enthaltendes (Meth)Acrylat als Monomereinheiten sowie einen Vernetzer enthält.

JP 2009 024157 A beschreibt eine Haftklebmasse für optische Zwecke, wobei die Haftklebmasse ein (Meth) Acrylatester-Copolymer mit einem gewichtsmittleren Molekulargewicht von 1.000.000 bis 2.000.000 und einen Weichmacher mit zwei aromatischen Gruppen umfasst und der Anteil des Weichmachers an der Haftklebmasse 3 - 50 Gew.-% des Anteils des Copolymers beträgt.

JP 2005 105228 A offenbart ein Klebeband für optische Anwendungen, das aus mindestens zwei übereinanderliegenden Haftklebmasseschichten besteht. Um die Lichtreflexion an den Grenzflächen zu reduzieren, wird vorgeschlagen, dass die Brechungsindexdifferenz zwischen den beiden an den äußeren Oberflächen liegenden Haftklebmasseschichten mindestens 0,02 beträgt.

Miyamoto Masao et al, "Dynamic Layer Detection of Rotating Multilayered Optical Memory", Japanese Journal of Applied Physics, Bd. 47, Nr. 7, 1. Juli 2008 (2008-07-01), Seiten 5944-5946 beschreibt scheibenförmige mehrschichtige Medien mit mehreren Brechungsindizes von Haftklebmassen für eine dynamische Schichtdetektion.

WO 2017/140801 A1 offenbart einen Haftklebestreifen aus mindestens vier Schichten, umfassend eine geschäumte Klebemassenschicht A und einen darunter angeordneten Folienträger B. Zur Verbesserung der Schockresistenz wird vorgeschlagen, dass zumindest die der Schicht A zugewandte Hauptfläche des Folienträgers B geätzt ist, wodurch die Verbindung zwischen der geschäumten Schicht und der Folie verbessert wird.

US 2017/0002236 A1 beschreibt ein mehrschichtiges Produkt mit einem Acrylat-basierten Schaumträger und einer darauf aufgebrachten mehrphasigen Polymerzusammensetzung. Diese Zusammensetzung enthält ein Kammpolymer sowie eine Kohlenwasserstoffkomponente, wobei die Glasübergangstemperatur der Kohlenwasserstoffphase zur Verbesserung der Haftung auf niederenergetischen Oberflächen um 35 bis 60 Kelvin höher ist als die der Acrylatphase.

Es besteht ein anhaltender Bedarf an Polymeren mit hoher Chemikalienbeständigkeit, die zur Verwendung in Haftklebmassen geeignet sind. Aufgabe der vorliegenden Erfindung ist es, ein Polyacrylat zur Verfügung zu stellen, dass diese Eigenschaften aufweist.

Ein erster und allgemeiner Gegenstand der Erfindung, mit welchem die vorstehende Aufgabe gelöst wird, ist eine Haftklebmasse, die zu insgesamt mindestens 50 Gew.-% mindestens ein Polyacrylat enthält, die dadurch gekennzeichnet ist, dass

- das Polyacrylat auf folgende Monomerenzusammensetzung zurückzuführen ist:

    a) 30 bis 75 Gew.-% mindestens eines Acrylsäureesters gemäß der Formel (I)

    $$CH_2=CH\text{-}C(O)OR^1 \qquad (I),$$

    worin $R^1$ für eine lineare oder verzweigte Alkylgruppe mit 1 bis 10 C-Atomen steht;

    b) 20 bis 65 Gew.-% mindestens eines Acrylsäureesters gemäß der Formel (II)

    $$CH_2=CH\text{-}C(O)OR^2 \qquad (II),$$

    worin $R^2$ für einen Phenoxyalkylrest steht;

    c) 0 bis 40 Gew.-% mindestens eines Acrylsäureesters der Formel (III)

    $$CH_2=C(O)OR^3 \qquad (III),$$

    worin $R^3$ für einen Alkyldiglykolrest oder einen Alkoxyalkylrest steht;

    d) 0,5 bis 10 Gew.-% mindestens eines Acrylatmonomers gemäß der Formel (IV)

    $$CH_2=CH\text{-}C(O)OR^4 \qquad (IV),$$

    worin $R^4$ für ein H-Atom oder einen Hydroxyalkylrest mit 1 bis 4 C-Atomen steht;

- das Polyacrylat vernetzt ist; und
- die Haftklebmasse geschäumt ist.

Wie sich gezeigt hat, weisen derartige Polymere sowohl die geforderte Chemikalienbeständigkeit als auch gute Haftklebeigenschaften auf und sind daher sehr gut als Basismaterial für entsprechende Haftklebmassen geeignet.

In einer Ausführungsform weist das Polyacrylat einen Hansen-Löslichkeitsparameter der polaren Wechselwirkungen von 7,5 bis 9,5 auf.

Eine in der Literatur bekannte Beschreibung von Löslichkeitsparametern erfolgt mittels des eindimensionalen Hildebrand-Parameters ($\delta$). Diese eindimensionalen $\delta$ -Werte sind jedoch mit Fehlern behaftet, die bei polaren Verbindungen wie Acrylaten oder solchen, die Wasserstoffbrückenbindungen eingehen können, wie bspw. Acrylsäure, meistens groß sind. Weil das Modell der eindimensionalen Hildebrand-Löslichkeitsparameter somit nur begrenzte Anwendung findet, wurde es durch Hansen weiterentwickelt (Hansen Solubility Parameters: A User's Handbook, Second Edition; Charles M. Hansen; 2007 CRC Press; ISBN 9780849372483).

Die heutzutage daher vielfach verwendeten Hansen-Löslichkeitsparameter sind dreidimensionale Löslichkeitsparameter. Sie bestehen aus einem dispersen Anteil ($\delta_d$), einem Anteil aus polaren Wechselwirkungen ($\delta_p$) und einem Anteil für die Wasserstoffbrückenbindungen ($\delta_H$). Mit dem Hildebrand-Parameter $\delta$ hängen sie wie folgt zusammen:

$$\delta^2 = \delta_d^2 + \delta_p^2 + \delta_H^2$$

$\Delta_d$, $\delta_p$ und $\delta_H$ können für Polyacrylate experimentell nicht direkt bestimmt, aber über Inkrementsysteme berechnet werden. Eine gängige und auch in dieser Schrift angewendete - Methode ist die nach Stefanis/Panayiotou (Prediction of Hansen Solubility Parameters with a New Group-Contribution Method; Int. J. Thermophys. (2008) 29:568-585; Emmanuel Stefanis, Costas Panayiotou):

Zur Bestimmung der Hansen-Löslichkeitsparameter für die Polyacrylate werden die Löslichkeitsparameter der auf die einzelnen Monomere zurückzuführenden Bausteine in den Polymeren, also die der Wiederholungseinheit in einer Polymerkette (ohne die polymerisierbare Doppelbindung, stattdessen unter Berücksichtung einer kovalenten $\sigma$-Bindung, wie sie in der Polymerkette vorliegt) gemäß der Vorschrift in der genannten Schrift berechnet. Dabei ist für jede Gruppe in dem Baustein jeweils ein bestimmter Wert für den dispersen Anteil ($\delta_d$), den Anteil der polaren Wechselwirkungen ($\delta_p$) und den Wasserstoffbrückenbildungs-Anteil ($\delta_H$) tabelliert, siehe Prediction of Hansen Solubility Parameters with a New Group-Contribution Method; Int. J. Thermophys. (2008), Tables 3 bis 6, Seiten 578 bis 582.

Beispiele:

Polyacrylsäure enthält die Wiederholungseinheit -[-CH$_2$-CHC(O)OH-]$_n$- ;

nach dem Inkrementsystem von Stefanis/Panayiotou ergeben sich die Hansen Löslichkeitsparameter (eine CH$_2$-Gruppe, eine CH-Gruppe und eine COOH-Gruppe) für den entsprechenden Baustein zu $\delta_d$ = 17,7, $\delta_p$ = 8,6 und $\delta_H$ = 11,1.

Polybutylacrylat enthält die Wiederholungseinheit

$$-[-CH_2-CHG(O)O(CH_2)_3CH_3-]_n- ;$$

mit vier CH$_2$-Gruppen, einer CH-Gruppe, einer COO-Gruppe und einer CH$_3$-Gruppe ergeben sich die Hansen Löslichkeitsparameter für den entsprechenden Baustein zu $\delta_d$ = 17,1, $\delta_p$ = 8,6 und $\delta_H$ = 6,5.

Nach der Berechnung der Hansen-Löslichkeitsparameter der Monomer-Bausteine kann die Bestimmung der entsprechenden Hansen-Löslichkeitsparameter der Polyacrylat-Copolymere erfolgen. Die Löslichkeitsparamater ($\delta_d$, $\delta_p$, $\delta_H$) für Acrylat-Copolymere werden ermittelt aus dem molaren Anteil der einzelnen Monomere (Bausteine), aus denen das Polyacrylat zusammengesetzt ist, wobei die jeweiligen Hansen-Werte mit dem molaren Anteil des Monomer-Bausteins im Copolymer multipliziert werden und anschließend die anteiligen Parameter ($\delta_d$, $\delta_p$, $\delta_H$ für jedes Monomer) summiert werden.

Dies sei am Beispiel eines Polyacrylats bestehend aus 97 Gew.-% Butylacrylat und 3 Gew.-% Acrylsäure, entsprechend einer molaren Zusammensetzung von 84,8 mol-% Butylacrylat und 5,2 mol-% Acrylsäure, verdeutlicht.

Tabelle 1: Berechnung Hansen-Löslichkeitsparameter

| | $\delta_d$ | $\delta_p$ | $\delta_H$ |
|---|---|---|---|
| Butylacrylat ($\delta_d$ = 17,1, $\delta_p$ = 8,6 und $\delta_H$ = 6,5) | 0,848 x 17,1 = 16,2 | 0,848 x 8,6 =8,2 | 0,848 x 6,5 =6,1 |
| Acrylsäure ($\delta_d$ = 17,7, $\delta_p$ = 8,6 und $\delta_H$ = 11,1) | 0,052 x 17,7 =0,9 | 0,052 x 8,6 =0,4 | 0,052 x 11,1 =0,6 |
| + | | | |
| Polyacrylat | 17,1 | 8,6 | 6,7 |

Für homogen mischbare Polymergemische wird entsprechend vorgegangen: Die Hansen-Löslichkeitsparameter eines jeweiligen Polymers werden jeweils mit dem molaren Anteil dieses Polymers in der Polymerkomponente multipliziert und die anteiligen Werte dann aufaddiert, um zum jeweiligen Parameter der Polymerkomponente zu gelangen.

Für eine Reihe für das Polyacrylat der erfindungsgemäßen Haftklebmasse geeigneter Monomere sind die jeweiligen Hansen-Löslichkeitsparameter in der im Beispielteil befindlichen Tabelle 3 aufgelistet, so dass die vorstehenden Werte für Polymerkomponenten mit daraus gebildeten Polymeren leicht zu ermitteln sind.

R[1] in der Formel (I) steht bevorzugt für einen Rest ausgewählt aus der Gruppe bestehend aus Methyl-, n-Butyl- und 2-Ethylhexylresten, besonders bevorzugt aus n-Butyl- und 2-Ethylhexylresten. Ganz besonders bevorzugt steht R[1] in der Formel (I) für einen n-Butylrest.

R[2] in der Formel (II) steht bevorzugt für einen Phenoxyethylrest, insbesondere einen 2-Phenoxyethylrest. Phenoxyethylacrylat ist in der Monomerenzusammensetzung des Polyacrylats bevorzugt zu 22 bis 60 Gew.-% enthalten.

R[3] in der Formel (III) steht bevorzugt für einen Ethyldiglykolrest oder einen Methoxyethylrest. Bevorzugt enthält die Monomerenzusammensetzung Monomere c) zu 1 bis 40 Gew.-%.

R$^4$ in der Formel (IV) steht bevorzugt für ein Wasserstoff-Atom.

In einer Ausführungsform ist das Polyacrylat auf folgende Monomerenzusammensetzung zurückzuführen: n-Butylacrylat zu 30 bis 55 Gew.-%, Methylacrylat zu 0 bis 25 Gew.-%, Ethyldiglykolacrylat zu 0 bis 40 Gew.-%, Methoxyethylacrylat zu 0 bis 25 Gew.-%, Phenoxyethylacrylat zu 20 bis 55 Gew.-% und Acrylsäure zu 1 bis 5 Gew.-%.

Besonders bevorzugt ist das Polyacrylat auf folgende Monomerenzusammensetzung zurückzuführen: n-Butylacrylat zu 40 bis 50 Gew.-%, Methylacrylat zu 15 bis 25 Gew.-%, Phenoxyethylacrylat zu 20 bis 40 Gew.-% und Acrylsäure zu 1 bis 5 Gew.-%.

Das Polyacrylat ist erfindungsgemäß vernetzt. Besonders bevorzugt ist das Polyacrylat thermisch vernetzt. Eine thermische Vernetzung kann unter wesentlich milderen Bedingungen durchgeführt werden als z.B. eine strahlungsinduzierte Vernetzung, die gelegentlich auch zerstörend wirken kann. Erfindungsgemäß ist es aber auch möglich, eine Vernetzung des Polyacrylats ausschließlich oder zusätzlich durch aktinische Strahlung zu bewirken, wobei gegebenenfalls erforderliche oder fördernde Vernetzersubstanzen zugesetzt werden können, z.B. UV-Vernetzer.

Bevorzugt ist das Polyacrylat also thermisch vernetzt, d.h. mittels Substanzen, die unter dem Einfluss thermischer Energie eine Vernetzungsreaktion ermöglichen (initiieren) und/oder fördern. Bevorzugte thermische Vernetzer sind kovalent reagierende Vernetzer, insbesondere Epoxide, Isocyanate und/oder Aziridine, und koordinative Vernetzer, besonders bevorzugt Metallchelate, insbesondere Aluminium-, Titan-, Zirconium- und/oder Eisenchelate. Es können auch Kombinationen verschiedener Vernetzer, z.B. eine Kombination von einem oder mehreren Epoxiden mit einem oder mehreren Metallchelaten, eingesetzt werden.

Ganz besonders bevorzugte Metallchelate sind Aluminiumchelate, beispielsweise Aluminium(III)-acetylacetonat. Diese Vernetzter werden bevorzugt in einer Menge von 0,01 bis 0,1 Gew.-Teilen, besonders bevorzugt von 0,02 bis 0,08 Gew.-Teilen, jeweils bezogen auf 100 Gew.-Teile des Polyacrylats (lösemittelfrei), eingesetzt.

Ganz besonders bevorzugte thermische Vernetzer sind Epoxide, insbesondere solche mit tertiären Aminfunktionen wie z.B. Tetraglycidyl meta-Xylendiamin (N,N,N',N'-Tetrakis(oxiranylmethyl)-1,3-benzendimethanamin). Diese Verbindungen werden bevorzugt in einer Menge von 0,03 bis 0,1 Gew.-Teilen, besonders bevorzugt von 0,04 bis 0,07 Gew.-Teilen, jeweils bezogen auf 100 Gew.-Teile des Polyacrylats (lösemittelfrei), eingesetzt.

Zur Herstellung der Polyacrylate können prinzipiell alle radikalischen oder radikalischkontrollierten Polymerisationen eingesetzt werden, ebenso auch Kombinationen verschiedener Polymerisationsverfahren. Neben der konventionellen, freien radikalischen Polymerisation sind dies z. B. auch die ATRP, die Nitroxid/TEMPO- kontrollierte Polymerisation oder der RAFT-Prozess.

Eine erfindungsgemäße Haftklebmasse zeichnet sich durch hohe Chemikalienbeständigkeit aus.

Unter einer Haftklebmasse bzw. einem Haftklebstoff wird erfindungsgemäß, wie im allgemeinen Sprachgebrauch üblich, ein Stoff verstanden, der zumindest bei Raumtemperatur dauerhaft klebrig sowie klebfähig ist. Charakteristisch für einen Haftklebstoff ist, dass er durch Druck auf ein Substrat aufgebracht werden kann und dort haften bleibt, wobei der aufzuwendende Druck und die Einwirkdauer dieses Drucks nicht näher definiert werden. Im allgemeinen, grundsätzlich jedoch abhängig von der genauen Art des Haftklebstoffs sowie des Substrats, der Temperatur und der Luftfeuchtigkeit, reicht die Einwirkung eines kurzfristigen, minimalen Drucks, der über eine leichte Berührung für einen kurzen Moment nicht hinausgeht, um den Haftungseffekt zu erzielen, in anderen Fällen kann auch eine längerfristige Einwirkdauer eines höheren Drucks notwendig sein.

Haftklebmassen haben besondere, charakteristische viskoelastische Eigenschaften, die zu der dauerhaften Klebrigkeit und Klebfähigkeit führen. Kennzeichnend für sie ist, dass, wenn sie mechanisch deformiert werden, es sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad der Haftklebemasse als auch von der Geschwindigkeit und Dauer der Deformation sowie von der Temperatur.

Der anteilige viskose Fluss ist zur Erzielung von Adhäsion notwendig. Nur die viskosen Anteile, häufig hervorgerufen durch Makromoleküle mit relativ großer Beweglichkeit, ermöglichen eine gute Benetzung und ein gutes Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Adhäsion. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander werden die mittels Dynamisch Mechanischer Analyse (DMA) ermittelbaren Größen Speichermodul (G') und Verlustmodul (G") herangezogen. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ •cos$(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ •sin$(\delta)$ ($\tau$ = Schubspannung, $\gamma$ = Deformation, $\delta$ = Phasenwinkel = Phasenverschiebung zwischen Schubspannungs- und Deformationsvektor).

Eine Masse gilt insbesondere dann als Haftklebmasse und wird im Sinne der Erfindung insbesondere dann als solche definiert, wenn bei 23 °C im Deformationsfrequenzbereich von $10^0$ bis $10^1$ rad/sec sowohl G' als auch G" zumindest zum Teil im Bereich von $10^3$ bis $10^7$ Pa liegen. "Zum Teil" heißt, dass zumindest ein Abschnitt der G'-Kurve innerhalb des Fensters liegt, das durch den Deformationsfrequenzbereich von einschließlich $10^0$ bis einschließlich $10^1$ rad/sec (Abszisse) sowie den Bereich der G'-Werte von einschließlich $10^3$ bis einschließlich $10^7$ Pa (Ordinate) aufgespannt wird, und wenn zumindest ein Abschnitt der G"-Kurve ebenfalls innerhalb des entsprechenden Fensters liegt.

Das Polyacrylat ist bevorzugt haftklebrig. Im einfachsten Fall besteht die erfindungsgemäße Haftklebmasse daher aus einem oder mehreren Polyacrylaten. Herstellungsbedingte Unreinheiten wie Lösemittelreste oder nicht umgesetzte Monomere sind hierbei unbeachtlich.

In einer Ausführungsform enthält die erfindungsgemäße Haftklebmasse mindestens ein Klebharz und/oder mindestens einen Weichmacher.

Klebharze, auch bezeichnet als klebrig machende Harze, werden Haftklebmassen häufig zur Feinjustierung der Haftklebeeigenschaften beigemischt.

Unter "Harzen" werden erfindungsgemäß insbesondere solche oligo- und (niedrig)polymeren Verbindungen verstanden, deren zahlenmittlere Molmasse Mn nicht mehr als 5.000 g/mol beträgt. Selbstredend werden kurzkettige Polymerisationsprodukte, die bei der Polymerisation des Polyacrylats entstehen, nicht unter den Begriff "Harze" subsumiert. Klebharze erhöhen in der Regel die Klebkraft, insbesondere auch die "Anfassklebrigkeit", den so genannten Tack einer Haftklebmasse.

Klebharze haben häufig Erweichungspunkte im Bereich von 80 bis 150 °C. Die Angaben zum Erweichungspunkt $T_E$ von oligomeren und polymeren Verbindungen, wie zum Beispiel der Harze, beziehen sich auf das Ring-Kugel-Verfahren gemäß DIN EN 1427:2007 bei entsprechender Anwendung der Bestimmungen (Untersuchung der Oligomer- bzw. Polymerprobe statt Bitumens bei ansonsten beibehaltener Verfahrensführung). Die Messungen erfolgen im Glycerolbad.

Bevorzugt enthält die erfindungsgemäße Haftklebmasse mindestens ein Klebharz ausgewählt aus der Gruppe bestehend aus Pinen- und Indenharzen; Kolophonium und Kolophoniumderivaten wie Kolophoniumestern, auch durch z. B. Disproportionierung oder Hydrierung stabilisierten Kolophoniumderivaten; Polyterpenharzen; Terpenphenolharzen; Alkylphenolharzen; und aliphatischen, aromatischen und aliphatisch-aromatischen Kohlenwasserstoffharzen.

Klebharze sind in der erfindungsgemäßen Haftklebmasse bevorzugt zu insgesamt maximal 30 Gew.-% enthalten. Es können ein oder mehrere Klebharze enthalten sein. Wie sich gezeigt hat, kann durch den Zusatz von Klebharzen das Verhalten einer erfindungsgemäßen Haftklebmasse unter dauerhafter Druckbelastung verbessert werden.

Daneben kann eine erfindungsgemäße Haftklebmasse auch Reaktivharze enthalten. Unter Reaktivharzen werden solche Harze verstanden, die derartige funktionelle Gruppen aufweisen, dass sie mit weiteren Bestandteilen der Haftklebmasse, insbesondere dem Polyacrylat bzw. den Polyacrylaten, unter geeigneter Aktivierung chemisch reagieren können.

Bevorzugt enthält die erfindungsgemäße Haftklebmasse mindestens einen Weichmacher. Weiter bevorzugt ist der Weichmacher ausgewählt aus der Gruppe bestehend aus (Meth)Acrylat-Oligomeren, Phthalaten, Kohlenwasserstoff-Ölen, Cyclohexandicarbonsäureestern, Benzoesäureestern, wasserlöslichen Weichmachern, Weichharzen, Phosphaten und Polyphosphaten. Besonders bevorzugt ist der Weichmacher ausgewählt Aus der Gruppe bestehend aus Phthalaten, Cyclohexandicarbonsäureestern und Benzoesäureestern. Insbesondere ist der Weichmacher ein Benzoesäureester, ganz besonders bevorzugt ein Dibenzoesäureester, beispielsweise Diethylenglykoldibenzoat. Weichmacher sind in der erfindungsgemäßen Haftklebmasse bevorzugt zu insgesamt maximal 30 Gew.-%, besonders bevorzugt zu maximal 20 Gew.-%, insbesondere zu maximal 15 Gew.-% enthalten.

Besonders bevorzugt umfasst eine erfindungsgemäße Haftklebmasse

mindestens ein Polyacrylat, das auf folgende Monomerenzusammensetzung zurückzuführen ist: n-Butylacrylat zu 30 bis 55 Gew.-%, Methylacrylat zu 0 bis 25 Gew.-%, Ethyldiglykolacrylat zu 0 bis 40 Gew.-%, Methoxyethylacrylat zu 0 bis 25 Gew.-%, Phenoxyethylacrylat zu 20 bis 55 Gew.-% und Acrylsäure zu 1 bis 5 Gew.-%; und

mindestens einen Benzoesäureester.

Insbesondere umfasst eine erfindungsgemäße Haftklebmasse

mindestens ein Polyacrylat, das auf folgende Monomerenzusammensetzung zurückzuführen ist: n-Butylacrylat zu 40 bis 50 Gew.-%, Methylacrylat zu 15 bis 25 Gew.-%, Phenoxyethylacrylat zu 20 bis 40 Gew.-% und Acrylsäure zu 1 bis 5 Gew.-%; und

Diethylenglykoldibenzoat, wobei Diethylenglykoldibenzoat zu 1 bis 12 Gew.-%, bezogen auf das Gesamtgewicht der Haftklebmasse, enthalten ist.

Wie sich gezeigt hat, lässt sich durch den Zusatz von einem oder mehreren Weichmachern die Schockresistenz einer erfindungsgemäßen Haftklebmasse verbessern, ohne dass die Chemikalienbeständigkeit dadurch wesentlich beeinträchtigt wird. In besonders hohem Maße lässt sich dieser Effekt durch den Zusatz von Diethylenglykoldibenzoat erzielen.

Bevorzugt beträgt der Anteil von Klebharzen und Weichmachern zusammen an der erfindungsgemäßen Haftklebmasse maximal 40 Gew.-%.

Zur Optimierung der Eigenschaften der erfindungsgemäßen Haftklebemasse kann diese zudem weitere geläufige Additive wie Füllstoffe, beispielsweise elektrisch leitfähige Füllmaterialien, thermisch leitfähige Füllmaterialien und dergleichen oder Flammschutzmittel, beispielweise Ammoniumpolyphosphat und dessen Derivate, enthalten.

Erfindungsgemäß ist die Haftklebmasse geschäumt. Unter einer "geschäumten Haftklebmasse" wird eine Haftklebmasse verstanden, die ein haftklebriges Matrixmaterial und mehrere gasgefüllte Hohlräume umfasst, so dass die Dichte dieser Haftklebmasse im Vergleich zum bloßen Matrixmaterial ohne Hohlräume verringert ist. Die Schäumung des Matrixmaterials der geschäumten Haftklebmasse kann grundsätzlich auf jede beliebige Art und Weise bewirkt werden. Beispielsweise kann die Haftklebmasse mittels eines eingebrachten oder in ihr freigesetzten Treibgases geschäumt werden. Bevorzugt enthält die geschäumte Haftklebmasse zumindest teilweise expandierte Mikrohohlkugeln. Darunter werden zumindest teilweise expandierte Mikrokugeln verstanden, die in ihrem Grundzustand elastisch und expandierbar sind und eine thermoplastische Polymerhülle aufweisen. Diese Kugeln sind - im Grundzustand - mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan gebräuchlich, die als verflüssigtes Gas unter Druck in der Polymerhülle eingeschlossen sind. Für derartige Mikrokugeln ist auch der Begriff "Mikroballons" gebräuchlich.

Durch Wärmeeinwirkung auf die Mikroballons erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Unexpandierte Mikroballontypen sind auch als wässrige Dispersion mit einem Feststoff- beziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die unexpandierten Mikroballons als solche zur Herstellung der geschäumten Haftklebmasse geeignet.

Eine geschäumte erfindungsgemäße Haftklebmasse kann auch mit sogenannten vorexpandierten Mikrohohlkugeln erzeugt werden. Bei dieser Gruppe findet die Expansion schon vor der Einmischung in die Polymermatrix statt.

Erfindungsgemäß bevorzugt enthält die geschäumte Haftklebmasse unabhängig von ihrem Herstellungsweg und von der eingesetzten Ausgangsform der Mikrohohlkugeln zumindest teilweise expandierte Mikrohohlkugeln. Der Begriff "zumindest teilweise expandierte Mikrohohlkugeln" wird erfindungsgemäß so verstanden, dass die Mikrohohlkugeln zumindest soweit expandiert sind, dass damit eine Dichteverringerung der Haftklebmasse in einem technisch sinnvollen Ausmaß im Vergleich zu derselben Klebmasse mit den unexpandierten Mikrohohlkugeln bewirkt wird. Dies bedeutet, dass die Mikroballons nicht zwingend vollständig expandiert sein müssen. Bevorzugt sind die "mindestens teilweise expandierten Mikrohohlkugeln" jeweils auf mindestens das Doppelte ihrer maximalen Ausdehnung im unexpandierten Zustand expandiert.

Der Ausdruck "zumindest teilweise expandiert" bezieht sich auf den Expansionszustand der individuellen Mikrohohlkugeln und soll nicht ausdrücken, dass nur ein Teil der in Betracht kommenden Mikrohohlkugeln (an)expandiert sein muss. Wenn also "zumindest teilweise expandierte Mikrohohlkugeln" und unexpandierte Mikrohohlkugeln in der Haftklebmasse enthalten sind, dann bedeutet dies, dass unexpandierte (gar nicht expandierte, also auch nicht anexpandierte) Mikrohohlkugeln nicht zu den "zumindest teilweise expandierten Mikrohohlkugeln" gehören.

Bevorzugt enthält die geschäumte Haftklebmasse 0,5 - 1,25 Gew.-%, stärker bevorzugt 0,5 bis 1 Gew.-%, zumindest teilweise expandierte Mikrohohlkugeln, jeweils bezogen auf das Gesamtgewicht der geschäumten Haftklebmasse. Die Dichte der geschäumten Haftklebmasse beträgt bevorzugt 950 - 750 kg/m$^3$, besonders bevorzugt 940 - 820 kg/m$^3$. Wie sich gezeigt hat, wird in diesen Bereichen eine besonders konstante Klebkraftretention unter dem Einfluss von Chemikalien erzielt.

Die Herstellung einer erfindungsgemäßen Haftklebmasse erfolgt bevorzugt derart, dass zunächst durch radikalische Polymerisationen das Polyacrylat bzw. die Polyacrylate aus den entsprechend zugrundeliegenden Monomermischungen hergestellt werden. Im Falle mehrerer Polyacrylate werden diese anschließend innig vermischt. Sofern vorgesehen, werden Vernetzer während oder bevorzugt nach der Polymerisation zugesetzt. Sofern weitere Additive zugesetzt werden sollen, werden diese ebenfalls beigemischt.

Eine erfindungsgemäße Haftklebmasse wird bevorzugt als Lösung - ggf. nach Einstellung eines bestimmten Feststoffgehalts - auf einen Träger oder einen Releaseliner beschichtet. Die Beschichtung erfolgt bevorzugt mittels üblicher Beschichtungsverfahren wie Rasterwalzenauftrag, Kommarakelbeschichtung, Mehrwalzenbeschichtung oder in einem Druckverfahren. Das Lösemittel kann anschließend in einem Trockenkanal oder -ofen entfernt werden.

Die Vernetzung erfolgt bei Einsatz thermischer Vernetzer in der Regel zu geringeren Anteilen bei Raumtemperatur und zu größeren Anteilen bei Wärmezufuhr, insbesondere während der Entfernung des Lösemittels. Koordinative Vernetzer vernetzen das Polyacrylat in der Regel temperaturunabhängig; aus diesem Grund werden gelegentlich auch Substanzen zugegeben, welche den Vernetzer zunächst blockieren. Diese werden dann mit dem Lösemittel entfernt, so dass zu diesem Zeitpunkt unmittelbar die Vernetzung einsetzt.

Alternativ kann die Beschichtung auch in einem lösemittelfreien Verfahren erfolgen. Hierzu wird das Polyacrylat in einem Extruder erwärmt und aufgeschmolzen. In dem Extruder können weitere Prozessschritte wie das Mischen mit Additiven, Filtration oder eine Entgasung erfolgen. Die Schmelze wird dann mittels eines Kalanders auf einen Träger oder einen Releaseliner als Schicht ausgebracht.

Ein weiterer Gegenstand der Erfindung ist ein Klebeband, das eine erfindungsgemäße Haftklebmasse umfasst.

Im einfachsten Fall besteht ein erfindungsgemäßes Klebeband nur aus einer erfindungsgemäßen Haftklebmasse. Um das zu einer Tellerrolle aufgerollte oder zu einer Spule kreuzgewickelte Klebeband applizieren zu können, ohne dass es mit sich selbst verklebt, ist die Haftklebmasse bevorzugt mit mindestens einem Releaseliner abgedeckt.

Ein erfindungsgemäßes Klebeband kann neben einer erfindungsgemäßen Haftklebmasse auch mindestens einen Träger und gegebenenfalls auch noch weitere Schichten, beispielsweise weitere Haftklebmasseschichten, Barriereschichten, weitere verstärkende Trägerschichten etc. umfassen. Grundsätzlich bestehen keine Einschränkungen hinsichtlich der Ausgestaltung des Trägers und der weiteren Schichten. Übliche Trägermaterialien sind beispielsweise Gewebe, Gelege und Kunststofffolien, zum Beispiel PET-Folien und Polyolefin-Folien. Auch in derartigen Ausführungsformen ist zumindest eine Haftklebmasse des Klebebandes bevorzugt mit einem Releaseliner abgedeckt, um ein problemloses Abwickeln zu ermöglichen und die Haftklebmasse(n) vor Verschmutzung zu schützen. Releaseliner bestehen üblicherweise aus einer ein- oder beidseitig silikonisierten Kunststofffolie (z.B. PET oder PP) oder einem silikonisierten Papierträger. Sie werden nicht dem Klebeband zugerechnet, sondern sind nur temporär als Hilfsmittel mit diesem verbunden.

Ein weiterer Gegenstand der Erfindung ist die Verwendung einer erfindungsgemäßen Haftklebmasse zur Herstellung von Verklebungen in elektronischen, optischen oder feinmechanischen Geräten.

Elektronische, optische und feinmechanische Geräte im Sinne der Erfindung sind insbesondere solche Geräte, wie sie in Klasse 9 der Internationalen Klassifikation von Waren und Dienstleistungen für die Eintragung von Marken (Klassifikation von Nizza); 10. Ausgabe (NCL(10-2013)); einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

wissenschaftliche, Schifffahrts-, Vermessungs-, fotografische, Film-, optische, Wäge-, Mess-, Signal-, Kontroll-, Rettungs- und Unterrichtsapparate und -Instrumente;

Apparate und Instrumente zum Leiten, Schalten, Umwandeln, Speichern, Regeln und Kontrollieren von Elektrizität;

Bildaufzeichnungs-, -verarbeitungs-, -übertragungs- und -wiedergabegeräte, wie beispielweise Fernseher und dergleichen;

Akustische Aufzeichnungs-, Verarbeitungs-, -übertragungs- und -wiedergabegeräte, wie beispielsweise Rundfunkgeräte und dergleichen;

Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte;

Fernkommunikations- und Multifunktionsgeräte mit Fernkommunikationsfunktion, wie beispielweise Telefone, Anrufbeantworter;

Chemische und physikalische Messgeräte, Steuergeräte und Instrumente, wie beispielweise Akkumulatorladegeräte, Multimeter, Lampen, Tachometer;

Nautische Geräte und Instrumente;

Optische Geräte und Instrumente;

Medizinische Geräte und Instrumente und solche für Sportler;

Uhren und Chronometer;

Solarzellenmodule, wie etwa elektrochemische Farbstoff-Solarzellen, organische Solarzellen, Dünnschichtzellen; und

Feuerlöschgeräte.

Die technische Entwicklung richtet sich vermehrt auf solche Geräte, die immer kleiner und leichter gestaltet werden, damit sie von ihrem Besitzer jederzeit mitgeführt werden können. Dies geschieht üblicherweise durch Realisierung geringer Gewichte und geeigneter Größe derartiger Geräte. Solche Geräte werden als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen und chemischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärker Belastungen aufgrund von Feuchtigkeitseinwirkungen, Temperatureinflüssen und dergleichen ausgesetzt als "immobile" Geräte, die üblicherweise in Innenräumen installiert sind und nicht oder kaum bewegt werden. Die erfindungsgemäß verwendete Klebmasse hat sich als besonders bevorzugt herausgestellt, solche Störeinflüsse zu überstehen und im Idealfall auch abzuschwächen oder zu kompensieren.

Eine erfindungsgemäße Haftklebmasse wird daher bevorzugt zur Herstellung von Verklebungen in portablen elektronischen, optischen oder feinmechanischen Geräten verwendet. Derartige portable Geräte sind insbesondere:

Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems;

Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads");

Monitore, Displays, Bildschirme, berührungsempfindliche Bildschirme (Sensorbildschirme, "Touchscreen-Geräte"), Beamer;

Lesegeräte für elektronische Bücher ("E-Books");

Kleinfernsehgeräte, Taschenfernseher, Filmabspielgeräte, Videoabspielgeräte Radios (auch Klein- und Taschenrundfunkgeräte), Walkmen, Discmen, Musikabspielgeräte für zum Beispiel CD, DVD, Bluray, Kassetten, USB, MP3, Kopfhörer Schnurlose Telefone, Mobiltelefone, Smartphones, Funksprechgeräte, Freisprechgeräte, Personenrufgeräte (Pager, Pieper);

Mobile Defibrillatoren, Blutzuckermessgeräte, Blutdruckmessgeräte, Schrittzähler, Pulsmesser;

Taschenlampen, Laserpointer;

Mobile Detektoren, optische Vergrößerungsgeräte, Fernsichtgeräte, Nachtsichtgeräte, GPS-Geräte, Navigationsgeräte, tragbare Schnittstellengeräte der Satellitenkommunikation;

Datenspeichergeräte (USB-Sticks, externe Festplatten, Speicherkarten); und

Armbanduhren, Digitaluhren, Taschenuhren, Kettenuhren, Stoppuhren.

Insbesondere wird eine erfindungsgemäße Haftklebmasse zur Herstellung von Verklebungen in Smartphones (Mobiltelefonen), Tablets, Notebooks, Kameras, Videokameras, Tastauren oder Touchpads verwendet.

Beispiele:

Herstellung der Polyacrylate

Ein für radikalische Polymerisationen konventioneller 300 L-Reaktor wurde mit insgesamt 100 kg der in Tabelle 2 angegebenen Monomeren entsprechend der dort ebenfalls angegebenen Zusammensetzung sowie 72,4 kg Benzin/-Aceton (70:30) befüllt. Nach 45minütiger Durchleitung von Stickstoffgas unter Rühren wurde der Reaktor auf 58 °C hochgeheizt und 50 g Vazo® 67 hinzugegeben. Anschließend wurde die Manteltemperatur auf 75 °C erwärmt und die Reaktion konstant bei dieser Außentemperatur durchgeführt. Nach 1 h Reaktionszeit wurden wiederum 50 g Vazo® 67 hinzugegeben. Nach 3 h wurde mit 20 kg Benzin/Aceton (70:30) und nach 6 h mit 10,0 kg Benzin/Aceton (70:30) verdünnt. Zur Reduktion der Restinitiatoren wurden nach 5,5 und nach 7 h jeweils 0,15 kg Perkadox® 16 hinzugegeben. Die Reaktion wurde nach 24 h Reaktionszeit abgebrochen und auf Raumtemperatur abgekühlt. Die Lösung wurde auf einen Feststoffgehalt von 38 Gew.-% eingestellt. Gegebenenfalls wurde nun der Weichmacher eingearbeitet (24 h Rühren bei Raumtemperatur). Zuletzt wurden als Vernetzer 0,075 Gew.-%, bezogen auf das Polymer, Erysis GA240 (Epoxid-Vernetzer) eingerührt.

Die erhaltene Zusammensetzung wurde in Lösung mittels Kommarakel auf eine silikonisierte PET-Folie beschichtet. Das Lösemittel wurde in einem Trockenkanal (20 min, 80 °C) entfernt. Die Zusammmesetzung wurde auf ein Backing (23 µm geätzte PET-Folie) aufgebracht, das Auftragsgewicht betrug 50 g/cm$^2$.

Klebkraft- und Chemikalienbeständigkeits-Test

Nach dem Abziehen der silikonisierten PET-Folie wurden die wie vorstehend erhaltenen Klebebänder in einer Breite von jeweils 10 mm auf eine vorher gereinigte ASTM-Stahlplatte aufgebracht und fünfmal je Richtung hin und her mit einer 4 kg-Rolle überwälzt. Anschließend wurden die so erhaltenen Verklebungen für 24 h bei Normklima (Luft, 23 °C, 50 % relative Feuchte) aufbewahrt.

Die Probemuster wurden anschließend für 72 h in einer abgedichteten Box in einem auf 60 °C temperierten Wasserbad gelagert, wobei jeweils eine Probe in die Testchemikalie getaucht und dann vollständig von dieser umgeben gelagert wurde und die jeweilige Referenzprobe in Luft gelagert wurde.

Testchemikalie 1:       Ölsäure mit einer Reinheit von > 85 %
Testchemikalie 2:       Ethanol/Wasser 85/15 (Gew.-Anteile).

Nachdem die Boxen aus dem Wasserbad und die Probemuster aus den Boxen entnommen waren, wurden die Probemuster mit einem Tuch vorsichtig gereinigt und nach 2 h Konditionierung im Normklima die Klebkraft bestimmt.

Die Bestimmung der Klebkraft erfolgte bei einem Prüfklima von 23 °C +/- 1 °C Temperatur und 50 % +/- 5 % relativer Luftfeuchte. Das Klebeband wurde mit einer Geschwindigkeit von 300 mm/min und in einem Winkel von 180 ° vom Stahlsubstrat abgezogen.

Die Messergebnisse (Tabelle 2) sind in N/cm angegeben und gemittelt aus drei Messungen.

Die Klebebänder werden als gegen die Testchemikalien beständig angesehen, sofern sie nach der Lagerung noch Klebkraft, insbesondere eine Klebkraft von mindestens 0,7 N/cm, zeigen. Die Chemikalienbeständigkeit ist umso besser, je geringer der Unterschied in der Klebkraft zwischen der Referenzprobe und den in den Chemikalien gelagerten Proben ist.

DuPont-Test zur Ermittlung der Schlagzähigkeit

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen PC-Rahmen (Außenmaße 45 mm x 45 mm; Stegbreite 10 mm; Innenmaße (Fensterausschnitt) 25 mm x 25 mm; Dicke 3 mm) geklebt. Auf die andere Seite des doppelseitigen Klebebands wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

DuPont-Test, z-Ebene:

Unmittelbar nach der Lagerung wurde der Klebeverbund aus PC-Rahmen, Klebeband und PC-Fenster mit den überstehenden Kanten des PC-Rahmens derart in eine Probenhalterung gespannt, dass der Verbund waagerecht ausgerichtet war und das PC-Fenster sich unterhalb des Rahmens befand. Die Probenhalterung wurde anschließend in die vorgesehene Aufnahme eines "DuPont Impact Testers" zentrisch eingesetzt. Der 190 g schwere Schlagkopf wurde so eingesetzt, dass die kreisförmige Aufschlaggeometrie mit einem Durchmesser von 20 mm auf der Fensterseite des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm-Schritten so lange erhöht, bis die eingebrachte Stoßenergie die Probe durch die Schlagbelastung zerstörte und das PC-Fenster sich vom PC Rahmen löste.

"Querschlagzähigkeit": DuPont-Test, x-y-Ebene

Unmittelbar nach der Lagerung wurde der Klebeverbund aus PC-Rahmen, Klebeband und PC-Scheibe Fenster mit den überstehenden Kanten des PC-Rahmens derart in eine Probenhalterung gespannt, dass der Verbund senkrecht ausgerichtet war. Die Probenhalterung wurde anschließend in die vorgesehene Aufnahme eines "DuPont Impact Testers" zentrisch eingesetzt. Der 300 g schwere Schlagkopf wurde so eingesetzt, dass die rechteckförmige Aufschlaggeometrie mit den Maßen von 20 mm x 3 mm auf der nach oben gerichteten Stirnseite des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm-Schritten so lange erhöht, bis die eingebrachte Stoßenergie die Probe durch die Querschlagbelastung zerstört und das PC Fenster sich vom PC Rahmen löste.

Um Versuche mit unterschiedlichen Proben vergleichen zu können, wurde die Energie wie folgt berechnet:

$$E \text{ [J]} = \text{Höhe [m]} * \text{Masse [kg]} * 9{,}81 \text{ kg/m} * \text{s}^2.$$

Es wurden jeweils fünf Proben pro Produkt getestet und der Energiemittelwert als Kennzahl für die Schlagzähigkeit angegeben.

Droptower-Test zur Ermittlung der Schlagzähigkeit

Aus dem zu untersuchenden Klebeband wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen mit Aceton gereinigten Stahl-Rahmen (Außenmaße 45 mm x 45 mm; Stegbreite 10 mm; Innenmaße (Fensterausschnitt) 25 mm x 25 mm) geklebt. Auf der anderen Seite des Klebebands wurde ein mit Aceton gereinigtes Stahl-Fenster (Außenmaße 35 mm x 35 mm) verklebt. Die Verklebung von Stahl-Rahmen, Klebebandrahmen und Stahl-Fenster erfolgte derart, dass die geometrischen Zentren und die Diagonalen jeweils übereinanderlagen (Eck-auf-Eck). Die Verklebungsfläche betrug 248 mm$^2$. Die Verklebung wurde für 5 s mit 248 N gepresst und für 24 Stunden konditioniert bei 23 °C / 50 % relativer Feuchte gelagert.

Unmittelbar nach der Lagerung wurde der Prüfkörper derart in die Probenhalterung des instrumentierten Fallwerkes eingesetzt, dass der Verbund waagerecht mit nach unten ausgerichtetem Stahlfenster vorlag. Die Messung erfolgte instrumentell und automatisch unter Nutzung eines Belastungsgewichts von 5 kg und einer Fallhöhe von 10 cm. Durch die eingebrachte kinetische Energie des Belastungsgewichtes wurde die Verklebung durch Bruch des Klebebandes zwischen Fenster und Rahmen zerstört, wobei die Kraft von einem piezoelektrischen Sensor im μs-Takt aufge-

zeichnet wurde. Die zugehörige Software gab dementsprechend nach der Messung den Graph für den Kraft-Zeit-Verlauf an, woraus sich die Maximalkraft $F_{max}$ bestimmen ließ. Kurz vor dem Aufprall der rechteckigen Aufschlaggeometrie auf das Fenster wurde die Geschwindigkeit des Fallgewichts mit zwei Lichtschranken bestimmt. Unter der Annahme, dass die eingebrachte Energie groß gegenüber der Schlagzähigkeit der Verklebung ist, wurde aus dem Kraftverlauf, der benötigten Dauer bis zur Ablösung und der Geschwindigkeit des Fallgewichts die geleistete Arbeit der Verklebung bis zur vollständigen Ablösung ermittelt, d.h. die Ablösearbeit. Es wurden von jeder Probe fünf Prüfkörper untersucht, das Endergebnis der Schlagzähigkeit besteht aus dem Mittelwert der Ablösearbeit bzw. der Maximalkraft dieser fünf Proben.

Tabelle 2: Zusammensetzung der Polyacrylate/Haftklebmassen, Ergebnisse

| Nr. | Zusammensetzung der Monomerenbasis (Gew.-%) | Anteil Diethylenglykol-dibenzoat (Gew.-%) | Hansen-Parameter $\delta_p$ | Klebkraft Referenzprobe | Klebkraft nach Lagerung in Ölsäure (N/cm) | Klebkraft nach Lagerung in Ethanol/ Wasser (N/cm) |
|---|---|---|---|---|---|---|
| 1 (V) | 43,5 n-BA<br>43,5 EHA<br>10 MA<br>3 AS | 0 | 8,2 | 7,5 | 0 | 0,57 |
| 2 (V) | 47,5 n-BA<br>47,5 EHA<br>5 AS | 0 | 8,0 | 8,5 | 0 | 0,63 |
| 3 (V) | 68 EHA<br>30 IBOA<br>2 AS | 0 | 6,8 | 7,9 | 0 | 0,74 |
| 4 (V) | 60 n-BA<br>37 MEA<br>3 AS | 0 | 9,3 | 12,6 | 2 | 0,5 |
| 5 (n.e. ) | 67 EHA<br>30 PEA<br>3 AS | 0 | 8,6 | 12,3 | 0,71 | 1 |
| 6 (n.e. ) | 47 n-BA<br>50 PEA<br>3 AS | 0 | 7,7 | 9,73 | 3,89 | 5,77 |
| 7 (n.e. ) | 47 n-BA<br>30 PEA<br>20 MA<br>3 AS | 0 | 9,3 | 6,82 | 3,53 | 4,4 |
| 8 (n.e. ) | 37 n-BA<br>25 PEA<br>35 EDGA<br>3 AS | 0 | 7,7 | 10,0 | 3,63 | 1,21 |
| 9 (n.e. ) | 47 n-BA<br>30 PEA<br>20 MEA<br>3 AS | 0 | 8,5 | 6,08 | 2,28 | 5,24 |
| 10 (n.e. ) | 47 n-BA<br>30 PEA<br>20 MA<br>3 AS | 2 | 9,3 | 8,54 | 3,88 | 5,71 |

(fortgesetzt)

| Nr. | Zusammensetzung der Monomerenbasis (Gew.-%) | Anteil Diethylenglykol -dibenzoat (Gew.-%) | Hansen -Parameter $\delta_p$ | Klebkraft Referenzprobe | Klebkraft nach Lagerung in Ölsäure (N/cm) | Klebkraft nach Lagerung in Ethanol/ Wasser (N/cm) |
|---|---|---|---|---|---|---|
| 11 (n.e.) | 47 n-BA 30 PEA 20 MA 3 AS | 5 | 9,3 | 7,1 | 3,9 | 5,72 |
| 12 (n.e.) | 47 n-BA 30 PEA 20 MA 3 AS | 10 | 9,3 | 7,01 | 3,89 | 5,49 |

n-BA    - n-Butylacrylat
EHA     - 2-Ethylhexylacrylat
MA      - Methylacrylat
AS      - Acrylsäure
PEA     - 2-Phenoxyethylacrylat
IBOA    - Isobornylacrylat
MEA     - Methoxyethylacrylat
EDGA    - Ethyldiglykolacrylat
V       - Vergleichsbeispiel
n.e.    - nicht erfindungsgemäß

Tabelle 3: Hansen-Löslichkeitsparameter ausgewählter Monomere

| | | HSP (Stefanis-Panayiotou) | | |
|---|---|---|---|---|
| CAS | Monomer | $\delta_d$ | $\delta_p$ | $\delta_h$ |
| 79-10-7 | Acrylsäure | 17,7 | 8,6 | 11,1 |
| 141-32-2 | n-Butylacrylat | 17,1 | 8,6 | 6,5 |
| 689-12-3 | Isobutylacrylat | 16,9 | 8,2 | 6,6 |
| 140-88-5 | Ethylacrylat | 17,1 | 9,2 | 7,3 |
| 103-11-7 | 2-Ethyhexylacrylat | 16,7 | 7,0 | 4,7 |
| 2499-95-8 | Hexylacrylat | 17,0 | 7,9 | 5,7 |
| 818-61-1 | Hydroxyethylacrylat | 17,8 | 12,0 | 15,3 |
| 5888-33-5 | Isobornylacrylat | 17,6 | 6,1 | 4,1 |
| 29590-42-9 | Isooctylacrylat | 16,8 | 7,0 | 5,0 |
| 96-33-3 | Methylacrylat | 17,2 | 9,5 | 7,7 |
| 3121-61-7 | Methoxyethylacrylat | 17,5 | 10,7 | 7,8 |
| 925-60-0 | Propylacrylat | 17,1 | 8,9 | 6,9 |
| 149021-58-9 | Propylheptylacrylat | 16,7 | 6,4 | 3,9 |
| 1663-39-4 | tert.-Butylacrylat | 16,4 | 9,5 | 6,0 |
| 48145-04-6 | 2-Phenoxyethylacrylat | 19,1 | 6,2 | 3,6 |

In einer weiteren Versuchsreihe wurden geschäumte Haftklebmassen hergestellt (Beispiele 14 - 19). Zu diesem Zweck wurden dem entsprechend der vorstehenden Vorschrift produzierten Polyacrylat Nr. 9 (siehe Tabelle 2) zusammen mit dem Vernetzer in etwas Lösemittel vordispergierte Mikroballons (Expancel 920DU20) zugegeben und 2 min eingerührt. Der Gewichtsanteil der Mikroballons an der vernetzten und getrockneten Haftklebmasse ist in der nachstehenden Tabelle 4 angegeben.

Die Zusammensetzungen wurden per Kommarakel auf silikonisierte PET-Folien beschichtet. Das Lösemittel wurde in einem Trockenkanal (19,5 min bei 80 °C, 30 s bei 170 °C) entfernt, wobei gleichzeitig die Expansion der Mikroballons und das damit verbundene Aufschäumen der Masse bewirkt wurden. Die erhaltenen geschäumten Haftklebmassen wurden auf den silikonisierten PET-Folien belassen, also nicht auf einen Träger aufgebracht (Transferklebebänder). Das Auftragsgewicht betrug 150 g/cm$^2$.

Tabellen 4 und 5 zeigen die jeweiligen Mikroballonanteile, die Dichten und die erzielten Testergebnisse.

Tabelle 4: Geschäumte Klebebänder und Vergleichsversuche - Testergebnisse

| Nr. | Polymer/Produkt | Mikroballonanteil (Gew.-%) | Dichte (kg/m$^3$) | Droptower (J) | DuPont, z-Richtung (J) | DuPont, x-y-Richtung (J) |
|---|---|---|---|---|---|---|
| 13 | Nr. 9 (Tabelle 2) (n.e) | 0 | 1200 | 0,27 | 0,42 | 0,98 |
| 14 | Nr. 9 (Tabelle 2) | 0,5 | 940 | 1,09 | 0,76 | 1,35 |
| 15 | Nr. 9 (Tabelle 2) | 0,75 | 900 | 1,19 | 0,83 | 1,47 |
| 16 | Nr. 9 (Tabelle 2) | 1 | 820 | 1,22 | 0,83 | 1,45 |
| 17 | Nr. 9 (Tabelle 2) | 1,25 | 750 | 0,57 | 0,69 | 1,2 |
| 18 | Nr. 9 (Tabelle 2) | 1,5 | 720 | 0,52 | 0,83 | 1,18 |
| 19 | Nr. 9 (Tabelle 2) | 1,75 | 700 | 0,47 | 0,76 | 0,98 |
| 20 (V) | tesa® 75415 | 0,95 | 800 | 0,527 | 0,42 | 0,88 |
| 21 (V) | tesa® 61215 | 0 | 1040 | 0,631 | 0,66 | 1,28 |
| 22 (V) | 3M™ VHB™ Electronic Tape 86415 | n.b. | n.b. | 0,995 | 0,66 | 0,81 |

Tabelle 5: Geschäumte Klebebänder und Vergleichsversuche - Testergebnisse

| Nr. | Klebkraft Stahl (N/cm) - Referenz | Klebkraft PC (N/cm) - Referenz | Klebkraft nach Lagerung 3 d bei 60 °C / 90 % relativer Luftfeuchte (N/cm) | Klebkraft nach Lagerung in Ölsäure (N/cm) | Klebkraft nach Lagerung in Ethanol/ Wasser (N/cm) |
|---|---|---|---|---|---|
| 13 | 6,7 | 10,3 | 8,4 | 6,3 | 6,7 |
| 14 | 5,2 | 6,8 | 11,4 | 3,9 | 8,3 |
| 15 | 5 | 6,4 | 11,4 | 4,1 | 8,4 |
| 16 | 5,4 | 6,3 | 8,3 | 5 | 7,3 |
| 17 | 4,6 | 6,7 | 9,7 | 4 | 8,6 |
| 18 | 3,8 | 5,1 | 16,5 | 3,8 | 10 |
| 19 | 3,3 | 4,4 | 18,3 | 3,9 | 11,5 |
| 20 (V) | 12,5 | 9,7 | 11,5 | 0,2 | 2,6 |
| 21 (V) | 15,9 | 13,7 | 14,5 | 0,2 | 9,1 |
| 22 (V) | 5,2 | 8 | 9,2 | 0 | 2,5 |

Erläuterungen:

| V | - Vergleichsbeispiel |
|---|---|
| tesa® 75415: | 150 μm dickes, doppelseitiges Transferklebeband, basierend auf einem geschäumten Polyacrylat/Synthesekautschuk-Blend |
| tesa® 61215: | 150 μm dickes, ungeschäumtes, doppelseitiges Klebeband aus einem PET-Backing und beidseitig aufgebrachten, Synthesekautschuk-basierten Haftklebmasseschichten |
| 3M™ VHB™ | Electronic Tape 86415:150 μm dickes, doppelseitiges umfassend einen Mikroballongeschäumten Träger und beidseitig aufgebrachte Haftklebmassen; alle drei Schichten enthalten Polyacrylat |

Soweit die für die Klebebänder der Beispiele 20 - 22 verwendeten Zusammensetzungen Polyacrylate umfassen, enthalten diese kein Phenoxyalkylacrylat.

**Patentansprüche**

1. Haftklebmasse, enthaltend zu insgesamt mindestens 50 Gew.-% mindestens ein Polyacrylat, **dadurch gekennzeichnet, dass**

   - das Polyacrylat auf folgende Monomerenzusammensetzung zurückzuführen ist:

      a) 30 bis 75 Gew.-% mindestens eines Acrylsäureesters gemäß der Formel (I)

      $$CH_2=CH-C(O)OR^1 \qquad (I),$$

      worin $R^1$ für eine lineare oder verzweigte Alkylgruppe mit 1 bis 10 C-Atomen steht;
      b) 20 bis 65 Gew.-% mindestens eines Acrylsäureesters gemäß der Formel (II)

      $$CH_2=CH-C(O)OR^2 \qquad (II),$$

      worin $R^2$ für einen Phenoxyalkylrest steht;
      c) 0 bis 40 Gew.-% mindestens eines Acrylsäureesters der Formel (III)

      $$CH_2=C(O)OR^3 \qquad (III),$$

      worin $R^3$ für einen Alkyldiglykolrest oder einen Alkoxyalkylrest steht;
      d) 0,5 bis 10 Gew.-% mindestens eines Acrylatmonomers gemäß der Formel (IV)

      $$CH_2=CH-C(O)OR^4 \qquad (IV),$$

      worin $R^4$ für ein H-Atom steht;

   - das Polyacrylat vernetzt ist; und
   - die Haftklebmasse geschäumt ist.

2. Haftklebmasse gemäß Anspruch 1, **dadurch gekennzeichnet, dass** $R^1$ für einen Rest ausgewählt aus der Gruppe bestehend aus Methyl-, n-Butyl- und 2-Ethylhexylresten steht.

3. Haftklebmasse gemäß einem der vorstehenden Ansprüche, **dadurch gekennzeichnet, dass** $R^2$ für einen Phenoxyethylrest steht.

4. Haftklebmasse gemäß einem der vorstehenden Ansprüche, **dadurch gekennzeichnet, dass** $R^3$ für einen Ethyldiglykolrest oder einen Methoxyethylrest steht.

5. Haftklebmasse gemäß einem der vorstehenden Ansprüche, **dadurch gekennzeichnet, dass** die Haftklebmasse ein Klebharz und/oder einen Weichmacher enthält.

6. Haftklebmasse gemäß einem der vorstehenden Ansprüche, **dadurch gekennzeichnet, dass** die Haftklebmasse Diethylenglykoldibenzoat enthält.

**7.** Haftklebmasse gemäß einem der vorstehenden Ansprüche, **dadurch gekennzeichnet, dass** die Haftklebmasse 0,5 - 1,25 Gew.-%, bezogen auf das Gesamtgewicht der Haftklebmasse, zumindest teilweise expandierte Mikrohohlkugeln enthält.

**8.** Klebeband, umfassend eine Haftklebmasse gemäß einem der vorstehenden Ansprüche.

**9.** Verwendung einer Haftklebmasse gemäß einem der Ansprüche 1 bis 7 zur Herstellung von Verklebungen in elektronischen, optischen oder feinmechanischen Geräten.

**Claims**

**1.** A pressure-sensitive adhesive containing to a total of at least 50% by weight of at least one polyacrylate, **characterized in that**

- the polyacrylate is based on the following monomer composition:

a) 30 to 75% by weight of at least one acrylic acid ester in accordance with formula (I)

$$CH_2=CH\text{-}C(O)OR^1 \qquad (I),$$

wherein $R^1$ represents a linear or branched alkyl group containing 1 to 10 C atoms;
b) 20 to 65% by weight of at least one acrylic acid ester in accordance with formula (II)

$$CH_2=CH\text{-}C(O)OR^2 \qquad (II),$$

wherein $R^2$ represents a phenoxyalkyl residue;
c) 0 to 40% by weight of at least one acrylic acid ester with formula (III)

$$CH_2=C(O)OR^3 \qquad (III),$$

wherein $R^3$ represents an alkyl diglycol residue or an alkoxyalkyl residue;
d) 0.5 to 10% by weight of at least one acrylate monomer in accordance with formula (IV)

$$CH_2=CH\text{-}C(O)OR^4 \qquad (IV),$$

wherein $R^4$ represents an H atom;

- the polyacrylate is crosslinked; and
- the pressure-sensitive adhesive is foamed.

**2.** The pressure-sensitive adhesive as claimed in claim 1, **characterized in that** $R^1$ represents a residue selected from the group consisting of methyl, n-butyl and 2-ethylhexyl residues.

**3.** The pressure-sensitive adhesive as claimed in one of the preceding claims, **characterized in that** $R^2$ represents a phenoxyethyl residue.

**4.** The pressure-sensitive adhesive as claimed in one of the preceding claims, **characterized in that** $R^3$ represents an ethyl diglycol residue or a methoxyethyl residue.

**5.** The pressure-sensitive adhesive as claimed in one of the preceding claims, **characterized in that** the pressure-sensitive adhesive contains an adhesive resin and/or a plasticizer.

**6.** The pressure-sensitive adhesive as claimed in one of the preceding claims, **characterized in that** the pressure-sensitive adhesive contains diethylene glycol dibenzoate.

**7.** The pressure-sensitive adhesive as claimed in one of the preceding claims, **characterized in that** the pressure-sensitive adhesive contains 0.5 - 1.25% by weight, with respect to the total weight of the pressure-sensitive adhesive, of at least partially expanded hollow microspheres.

8. An adhesive tape comprising a pressure-sensitive adhesive as claimed in one of the preceding claims.

9. Use of a pressure-sensitive adhesive as claimed in one of claims 1 to 7 for the production of bonds in electronic, optical or precision mechanical devices.

**Revendications**

1. Masse d'adhésif sensible à la pression, contenant au total au moins 50 % en poids d'un polyacrylate, **caractérisée en ce que**

   - ledit polyacrylate est issu de la composition de monomères suivante :

      a) 30 à 75 % en poids d'au moins un ester d'acide acrylique selon la formule (I)

      $$CH_2{=}CH\text{-}C(O)OR^1 \qquad (I)$$

      dans laquelle $R^1$ représente un groupe alkyle linéaire ou ramifié renfermant 1 à 10 atomes de carbone ;
      b) 20 à 65 % en poids d'au moins un ester d'acide acrylique selon la formule (II)

      $$CH_2{=}CH\text{-}C(O)OR^2 \qquad (II)$$

      dans laquelle $R^2$ représente un radical phénoxyalkyle ;
      c) 0 à 40 % en poids d'au moins un ester d'acide acrylique selon la formule (III)

      $$CH_2{=}C(O)OR^3 \qquad (III)$$

      dans laquelle $R^3$ représente un radical d'alkyldiglycol ou un radical alkoxyalkyle ;
      d) 0,5 à 10 % en poids d'au moins un monomère d'acrylate selon la formule (IV)

      $$CH_2{=}CH\text{-}C(O)OR^4 \qquad (IV)$$

      dans laquelle $R^4$ représente un atome de H ;

   - ledit polyacrylate est réticulé, et
   - la masse d'adhésif sensible à la pression est transformée en mousse.

2. Masse d'adhésif sensible à la pression, **caractérisée en ce que** $R^1$ représente un radical choisi dans le groupe constitué de radicaux méthyle, n-butyle et 2-éthylhexyle.

3. Masse d'adhésif sensible à la pression selon l'une des revendications précédentes, **caractérisée en ce que** $R^2$ représente un radical phénoxyéthyle.

4. Masse d'adhésif sensible à la pression selon l'une des revendications précédentes, **caractérisée en ce que** $R^3$ représente un radical d'éthyldiglycol ou un radical méthoxyéthyle

5. Masse d'adhésif sensible à la pression selon l'une des revendications précédentes, **caractérisée en ce que** la masse d'adhésif sensible à la pression contient une résine collante et/ou un plastifiant.

6. Masse d'adhésif sensible à la pression selon l'une des revendications précédentes, **caractérisée en ce que** la masse d'adhésif sensible à la pression contient du dibenzoate de diéthylèneglycol.

7. Masse d'adhésif sensible à la pression selon l'une des revendications précédentes, **caractérisée en ce que** la masse d'adhésif sensible à la pression contient 0,5 à 1,25 % en poids, par rapport au poids total de la masse d'adhésif sensible à la pression, de microbilles creuses au moins partiellement expansées.

8. Ruban adhésif, comprenant une masse d'adhésif sensible à la pression selon l'une des revendications précédentes.

9. Utilisation d'une masse d'adhésif sensible à la pression selon l'une des revendications 1 à 7 pour réaliser des liaisons par adhérence dans des appareils électroniques, optiques ou appartenant au domaine de la mécanique de précision.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016089687 A1
- WO 2017132058 A1
- DE 102015215247 A1
- US 5665835 A
- US 20030032715 A1
- US 20080033109 A1
- US 9482896 B2
- US 8372492 B2
- EP 989174 A1
- US 2008145572 A1
- JP 2009024157 A
- JP 2005105228 A
- WO 2017140801 A1
- US 20170002236 A1

**In der Beschreibung aufgeführte Nicht-Patentliteratur**

- **MIYAMOTO MASAO et al.** Dynamic Layer Detection of Rotating Multilayered Optical Memory. *Japanese Journal of Applied Physics*, 01 July 2008, vol. 47 (7), 5944-5946
- Prediction of Hansen Solubility Parameters with a New Group-Contribution Method. *Int. J. Thermophys*, 2008, vol. 29, 568-585
- Prediction of Hansen Solubility Parameters with a New Group-Contribution Method. *Int. J. Thermophys*, 2008, 578-582
- *CHEMICAL ABSTRACTS*, 79-10-7
- *CHEMICAL ABSTRACTS*, 141-32-2
- *CHEMICAL ABSTRACTS*, 689-12-3
- *CHEMICAL ABSTRACTS*, 140-88-5
- *CHEMICAL ABSTRACTS*, 103-11-7
- *CHEMICAL ABSTRACTS*, 2499-95-8
- *CHEMICAL ABSTRACTS*, 818-61-1
- *CHEMICAL ABSTRACTS*, 5888-33-5
- *CHEMICAL ABSTRACTS*, 29590-42-9
- *CHEMICAL ABSTRACTS*, 96-33-3
- *CHEMICAL ABSTRACTS*, 3121-61-7
- *CHEMICAL ABSTRACTS*, 925-60-0
- *CHEMICAL ABSTRACTS*, 149021-58-9
- *CHEMICAL ABSTRACTS*, 1663-39-4
- *CHEMICAL ABSTRACTS*, 48145-04-6